# NEUE EUROPÄISCHE PATENTSCHRIFT

(11) **EP 3 159 646 B2**
(45) Veröffentlichungstag und Bekanntmachung des Hinweises auf die Entscheidung über den Einspruch: **29.12.2021**
(45) Hinweis auf die Patenterteilung: 06.03.2019
(21) Anmeldenummer: 16002142.4
(22) Anmeldetag: 30.09.2016
(51) Int. Cl.: F28D 7/16, F28D 21/00, F28F 27/02, F28F 21/04, F02M 26/26, F28F 9/02, F28D 7/10, F02M 26/32

(54) **WÄRMEÜBERTRAGER**
HEAT EXCHANGER
ÉCHANGEUR DE CHALEUR

(30) Priorität: 20.10.2015 DE 102015013517
(43) Veröffentlichungstag der Anmeldung: 26.04.2017
(73) Patentinhaber: Borsig GmbH, 13507 Berlin (DE)
(72) Erfinder: Müggenburg, Jan, 16540 Hohen Neuendorf (DE)
(74) Vertreter: Radünz, Ingo

(56) Entgegenhaltungen:
- WO-A1-2011/089140
- DE-A1-102009 048 592
- US-A1- 2009 293 654

## Beschreibung

Die Erfindung betrifft einen Wärmeübertrager, der eine Vielzahl von Wärmeübertragungsrohren und ein zentrisch angeordnetes Bypassrohr umfasst, die jeweils zwischen einer ersten Rohrplatte einer Gaseintrittskammer und einer zweiten Rohrplatte einer Gasaustrittskammer gehalten sind, wobei die jeweiligen Rohrplatten mit einem zylindrischen Mantel verbunden sind, innerhalb dem ein Mantelraum ausgebildet ist, in welchem die Wärmeübertragungsrohre und das Bypassrohr eingeschlossen sind und ein Kühlmittel einleitbar ist, wobei mindestens ein Einlassstutzen angeordnet ist, der mit dem zylindrischen Mantel zum Einleiten von einem Kühlmittel in den Mantelraum auf die Mantelseite der Wärmeübertragungsrohre verbunden ist, wobei mindestens ein Auslassstutzen angebracht ist, der mit dem zylindrischen Mantel zum Ableiten von erzeugtem Wasser/Dampfgemisch durch indirekte Wärmeübertragung über die Mantelseite der Wärmeübertragungsrohre aus dem Mantelraum verbunden ist, wobei ein Eintrittsstutzen befestigt ist, der seitlich oder axial an der Gaseintrittskammer in Gasflussrichtung vor der ersten Rohrplatte zum Einleiten eines heißen Abgasstromes in die Wärmeübertragungsrohre und das Bypassrohr auf der Gaseintrittsseite der ersten Rohrplatte angeordnet ist, wobei ein Austrittsstutzen angebracht ist, der seitlich oder axial an der Gasaustrittskammer in Gasflussrichtung hinter der zweiten Rohrplatte zum Ableiten eines Gemisches aus den gekühlten Abgasströmen aus den Wärmeübertragungsrohren und dem ungekühlten Abgasstrom aus dem Bypassrohr auf der Gasaustrittsseite der zweiten Rohrplatte angeordnet ist.

Wärmeübertrager werden für verschiedene chemische und petrochemische Prozesse verwendet. Bei solchen Prozessen unterliegen Wärmeübertragungsrohre innerhalb der Rohre und außerhalb der Rohre auf der Mantelseite unterschiedlichen gasförmigen und/oder flüssigen Medien.

In der Regel wird bei solchen Prozessen das aus einem Prozess stammende heiße Abgas den Wärmeübertragungsrohren sowie dem Bypassrohr zugeführt. Dabei gibt das heiße Abgas beim Durchströmen der Wärmeübertragungsrohre seine Wärme über den jeweiligen Rohrmantel an ein Kühlmittel ab, das sich im Mantelraum befindet.

Als Kühlmittel wird üblicherweise Wasser verwendet. Das durch Wärmeübertragung auf das Kühlmittel abgekühlte Abgas strömt anschließend aus dem Wärmeübertrager. Oft ist es notwendig, die Gasaustrittstemperatur des Wärmeübertragers in einem vorbestimmten Temperaturbereich zu halten.

Zum Einstellen der Gasaustrittstemperatur wird gewöhnlich ein üblicher Bypass verwendet. Ein Beeinflussen der Gasaustrittstemperatur durch einen Bypass erfolgt verschiedentlich mit einer Regelklappe oder Regeldrehklappe oder einem Regelstopfen. Solche Regeleinrichtungen sind am Auslassende des Bypassrohres angeordnet. Derartige Regeleinrichtungen sind aus DE 28 46 455 B1 oder EP 0 356 648 A1 bekannt.

Die Abgase im Bypassrohr eines Wärmeübertragers weisen eine sehr hohe Temperatur auf. In den meisten Fällen durchströmen solche Abgase das Bypassrohr auch mit hoher Geschwindigkeit. Daher ist eine am Auslassende eines Bypassrohres angeordnete Regeleinrichtung, wie beispielsweise ein Regelstopfen oder eine Regelklappe, einer sehr hohen thermisch bedingten Belastung ausgesetzt.

Aus EP 1 498 678 A1 ist ein Wärmetauscher mit einem Bypassrohr bekannt, das eine Verschlussvorrichtung als ausgebildeten Kolben aufweist, der doppelwandig ausgeführt ist und bei dem in der Doppelwand des Kolbens Kühlkanäle für ein Durchströmen von einem Kühlmittel angebracht sind. Dabei wird das Kühlmittel den Kühlkanälen in der Doppelwand des Kolbens durch eine in einer Stange zur Betätigung des Kolbens vorgesehene Kühlmittelleitung zugeführt.

Aus DE 39 13 422 A1 ist ein Rohrbündelwärmetauscher bekannt, der ein zentrisch angeordnetes Teilstromrohr aufweist, das an dem austrittsseitigen Ende der Gasströmung eine Regelklappe vorsieht. Die Regelklappe ist doppelwandig ausgeführt und in ihrem Innenraum mit Kanälen ausgerüstet, durch die ein Kühlmittel durchleitbar ist, das durch eine als Hohlwelle ausgeführte Klappenwelle herangeführt wird.

Aus DE 10 2005 057 674 B4 ist ein Abhitzekessel bekannt, der eine Regeleinrichtung umfasst, wobei durch einen am Auslassende eines Bypassrohres angeordneten und über die Regeleinrichtung axial verstellbaren Stopfen die Austrittsgeschwindigkeit und Austrittsmenge des Gasstromes im Bypassrohr regelbar ist. Dabei wird der Stopfen durch ein Kühlmedium gekühlt, das durch in dem Stopfen angeordnete Kühlkanäle fließt.

Aus DE 10 2009 048 592 A1 ist ein Wärmeübertrager gemäß dem Oberbegriff des Anspruchs 1 bekannt.

Als nachteilig hat sich bei den bekannten Regeleinrichtungen für ein Bypassrohr zum Beeinflussen der Austrittstemperatur eines Wärmeübertragers herausgestellt, dass solche gekühlten Kolben oder Regelklappen anfällig sind gegen die sich einstellenden Temperaturprofile, gegen Ausfall des Kühlstromes und Thermoschocksituationen, so dass Undichtigkeiten an solchen Stopfen und Regelklappen entstehen. Damit vermögen die bekannten Regeleinrichtungen die Aufgabe, die Austrittstemperatur eines Wärmeübertragers durch solche Regeleinrichtungen für ein Bypassrohr zu beeinflussen, nicht mehr hinreichend zu erfüllen, so dass es zu unerwünscht kurzen Wartungsintervallen oder zu einer kürzeren Lebensdauer eines Wärmeübertragers kommt.

Die Aufgabe der vorliegenden Erfindung besteht darin, einen Wärmeübertrager zu schaffen, der zur Regelung einer bestimmten Abgastemperatur eine zuverlässige Regelvorrichtung schafft, welche den hohen temperaturbedingten Belastungen eines Abgasstromes ohne die Verwendung eines Kühlmittels für das Regelelement einwandfrei standhält und konstruktiv nicht so aufwendig ist.

Die Aufgabe der Erfindung wird durch die Merkmale des Patentanspruchs 1 gelöst.

Vorteilhafte Ausgestaltungen der Erfindung sind in den Unteransprüchen angegeben.

Gemäß der Lösung der zugrundeliegenden Aufgabe der vorliegenden Erfindung wird ein Wärmeübertrager geschaffen, der die nachfolgenden Vorteile aufweist:
Der Wärmeübertrager umfasst eine Vielzahl von Wärmeübertragungsrohren und ein zentrisch angeordnetes Bypassrohr, die jeweils zwischen einer Rohrplatte einer Gaseintrittskammer und einer Rohrplatte einer Gasaustrittskammer angeordnet sind. Dabei sind die jeweiligen Rohrplatten mit einem zylindrischen Mantel verbunden, innerhalb dem ein Mantelraum ausgebildet ist. In dem Mantelraum sind die Wärmeübertragungsrohre und das Bypassrohr eingeschlossen. Durch den Mantelraum fließt ein Kühlmittel. Mindestens ein Einlassstutzen ist mit dem zylindrischen Mantel zum Einleiten des Kühlmittels in den Mantelraum auf die Mantelseite der Wärmeübertragungsrohre verbunden. Weiterhin ist mindestens ein Auslassstutzen mit dem zylindrischen Mantel zum Ableiten von erzeugtem Wasser/Dampfgemisch durch indirekte Wärmeübertragung über die Mantelseite der Wärmeübertragungsrohre aus dem Mantelraum verbunden. Ein Eintrittsstutzen ist seitlich oder axial an der Gaseintrittskammer in Gasflussrichtung vor der Rohrplatte zum Einleiten eines heißen Abgasstromes in die Wärmeübertragungsrohre und das Bypassrohr auf der Gaseintrittsseite der Rohrplatte angeordnet. Ein Austrittsstutzen ist seitlich oder axial an der Gasaustrittskammer in Gasflussrichtung hinter der Rohrplatte zum Ableiten eines Gemisches aus gekühltem Abgasstrom aus den Wärmeübertragungsrohren und ungekühltem Abgasstrom aus dem Bypassrohr auf der Gasaustrittsseite der Rohrplatte angeordnet. Besonders vorteilhaft ist eine in unmittelbarer Nähe am Auslassende des Bypassrohres angeordnete Regelvorrichtung, die eine mit einem Antrieb verbundene Drosselklappe zum Einstellen einer Gasaustrittstemperatur des Wärmeübertragers auf einen bestimmten Temperaturbereich umfasst. Dabei ist durch die am Auslassende des Bypassrohres angeordnete und mittels des Antriebes der Regelvorrichtung verstellbare Drosselklappe eine vorbestimmte Austrittsgeschwindigkeit und Austrittsmenge des Abgasstromes aus dem Bypassrohr regelbar. Vorteilhafterweise besteht die Drosselklappe für den für Hochtemperaturkorrosion empfindlichen Temperaturbereich aus einem gegen Hochtemperaturkorrosion resistenten Material.

Die Drosselklappe ist senkrecht zur Gasflussrichtung im Klappengehäuse drehbar angeordnet. Dabei ist vorteilhaft das Klappengehäuse als Verlängerung des Bypassrohres mit gleichem Durchmesser oder erweitertem Durchmesser mit einem konischen Ansatz als Übergang vom Auslassende des Bypassrohres zum erweiterten Durchmesser des Klappengehäuses ausgebildet.

Als ein hochtemperaturresistentes oder metaldustingresistentes Material wird für die Drosselklappe bevorzugterweise ein keramischer Werkstoff verwendet.

Aufgrund der vorteilhaften Ausgestaltung eines Wärmeübertragers mit einer Regelvorrichtung zum Anpassen der Gasaustrittstemperatur eines abgekühlten Abgasstromes an die geforderten Temperaturverhältnisse in einem bestimmten Temperaturbereich mit Hilfe des ungekühlten Abgasstromes aus dem Bypassrohr wird eine zuverlässige Temperaturbeeinflussung geschaffen, die unabhängig von einer einwandfreien Kühlmittelzufuhr und der Wirksamkeit der Durchkühlung für die verwendeten Regelelemente und der Abdichtung der Kühlmittelleitungen arbeitet. Bei der vorliegenden Erfindung werden für das Regelelement hochtemperaturresistente oder metal-dusting-resistente Werkstoffe verwendet, die keine spezielle Kühlung erfordern. Bauteile aus anderen Werkstoffen sind vom ungekühlten Abgasstrom thermisch soweit isoliert angeordnet, dass diese Bauteile gemäß der Eignung dieser Werkstoffe zuverlässig eingesetzt werden können.

Nachstehend ist ein Ausführungsbeispiel der Erfindung in der Beschreibung anhand eines in der Zeichnung dargestellten Wärmeübertragers näher erläutert.

Es zeigen:
Fig. 1 einen Längsschnitt durch einen Wärmeübertrager im verkleinerten Maßstab nach der Erfindung und
Fig. 2 eine Einzelheit X der Fig. 1 als Längsschnitt in vergrößertem Maßstab durch ein Auslassende eines Bypassrohres eines Wärmeübertragers nach der Erfindung mit einer im Bereich des Auslassendes angeordneten Regelvorrichtung.

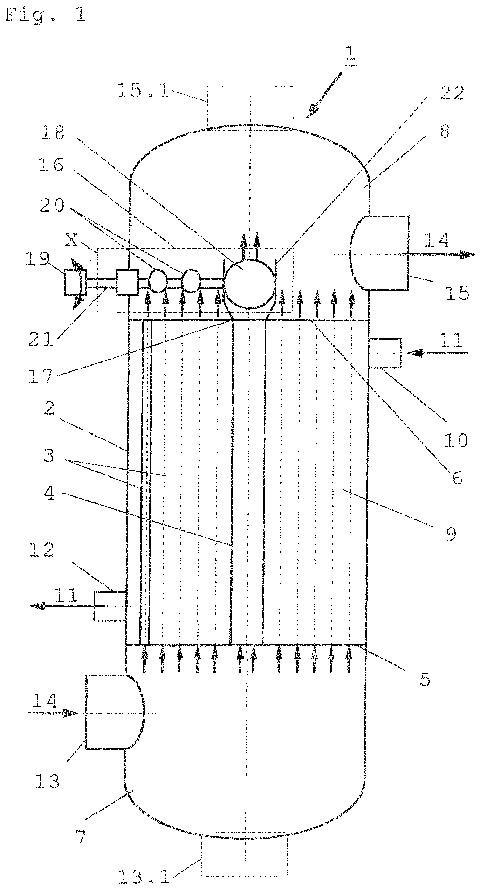

Ein Wärmeübertrager 1 ist in Fig. 1 in vertikaler Anordnung im Längsschnitt schematisch dargestellt. Solche Wärmeübertrager 1 werden für verschiedene chemische und petrochemische Prozesse verwendet. Der Wärmeübertrager 1 besteht aus einer Vielzahl von Wärmeübertragungsrohren 3 und einem zentrisch angeordneten Bypassrohr 4, die jeweils zwischen einer ersten Rohrplatte 5 einer Gaseintrittskammer 7 und einer zweiten Rohrplatte 6 einer Gasaustrittskammer 8 gehalten sind. Dabei sind die jeweiligen Rohrplatten 5, 6 mit einem zylindrischen Mantel 2 verbunden, innerhalb dem ein Mantelraum 9 ausgebildet ist. In dem Mantelraum 9 sind die Wärmeübertragungsrohre 3 und das Bypassrohr 4 eingeschlossen. Durch den Mantelraum 9 strömt ein Kühlmittel 11.

Das Bypassrohr 4 ist mit einem größeren Durchmesser als die Wärmeübertragungsrohre 3 ausgelegt. Über seine Länge weist das Bypassrohr 4 auf der Rohrinnenwand 30 eine Wärmeisolierung 23 auf, die dafür vorgesehen ist, dass das Bypassrohr 4 im wesentlichen keine Wärme bei durchströmendem Abgasstrom 14 abgibt.

Das Kühlmittel 11 strömt, wie durch einen Pfeil verdeutlicht, über mindestens einen am zylindrischen Mantel 2 seitlich angebrachten Einlassstutzen 10 in Flussrichtung des Abgasstromes 14 vor der Rohrplatte 6 der Gasaustrittskammer 8 in den Mantelraum 9. Das Kühlmittel 11 verlässt den Mantelraum 9 als Wasser/Dampfgemisch über mindestens einen am zylindrischen Mantel 2 seitlich angebrachten Auslassstutzen 12 hinter der ersten Rohrplatte 5 der Gaseintrittskammer 7. Das bei der Kühlung entstehende Wasser/Dampfgemisch wird durch indirekte Wärmeübertragung über die Mantelseite der Wärmeübertragungsrohre 3 erzeugt.

An der Gaseintrittskammer 7 ist seitlich oder axial, wie lediglich punktiert angedeutet, ein Eintrittsstutzen 13, 13.1 in Gasflussrichtung vor der ersten Rohrplatte 5 angebracht, durch den der Abgasstrom 14, wie durch einen Pfeil angedeutet, in die Gaseintrittskammer 7 und von dort in die Enden der in der ersten Rohrplatte 5 gehaltenen Wärmeübertragungsrohre 3 und das eine Ende des Bypassrohres 4 strömt, wie durch Pfeile angedeutet.

An der Gasaustrittskammer 8 ist seitlich oder axial, wie lediglich punktiert angedeutet, ein Austrittsstutzen 15, 15.1 in Gasflussrichtung hinter der zweiten Rohrplatte 6 angebracht, durch den der Abgasstrom 14, wie durch einen Pfeil angedeutet, die Gasaustrittskammer 8 verlässt, die mit den Enden der in der zweiten Rohrplatte 6 gehaltenen Wärmeübertragungsrohre 3 und mit dem anderen Ende des Bypassrohres 4 verbunden ist, aus denen aufgeteilte Abgasströme, wie durch Pfeile angedeutet, entweichen.

Am Auslassende 17 des Bypassrohres 4 ist eine Regelvorrichtung 16 angeordnet. Die Regelvorrichtung 16 umfasst eine Drosselklappe 18 in einem Klappengehäuse 22 und einen außerhalb des Wärmeübertragers 1 angeordneten Antrieb 19. Der Antrieb 19 ist mit einer Welle 21 und Doppelgelenken 20 und einem integrierten Wellenstumpf 27 der Drosselklappe 18 verbunden und bildet einen Antriebsstrang. Die Drosselklappe 18 ist mit Hilfe des Antriebs 19 über die Welle 21 mit den verbundenen Doppelgelenken 20 und dem Wellenstumpf 27 verstellbar angeordnet.

Die Doppelgelenke 20 sind im wesentlichen dafür vorgesehen, Dehnungsunterschiede zwischen zwei Auflagerungen 25 für den jeweiligen integrierten Wellenstumpf 27 der Drosselklappe 18 in dem Klappengehäuse 22 und einer Auflagerung 26 für die Welle 21 auszugleichen. Die jeweilige Auflagerung 25 ist in einer Wärmeisolierung 24 ausgebildet, die an einer Innenwand 29 des Klappengehäuses 22 aufgebracht ist. Die Auflagerung 26 ist in einer Wand 28 der Gasaustrittskammer 8 angeordnet.

Die Drosselklappe 18 ist senkrecht zur Gasflussrichtung in dem Klappengehäuse 22 drehbar angeordnet. Die an der Innenwand 29 des Klappengehäuses 22 aufgebrachte Wärmeisolierung 24 ist vorzugsweise als eine Ausmauerung ausgeführt.

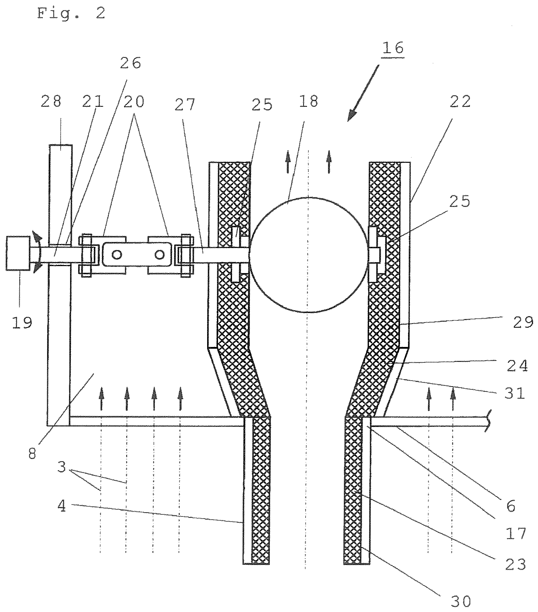

Das Klappengehäuse 22 ist als Verlängerung des Bypassrohres 4 mit gleichem Durchmesser ausgeführt, wenn die vorliegenden Bauverhältnisse beim Wärmeübertrager 1 ausreichen. Bei beengten Bauverhältnissen ist eine Ausführung des Klappengehäuses 22, wie in Fig. 2 gezeigt, vorzuziehen, wobei die Verlängerung des Bypassrohres 4 über einen konischen Ansatz 31 als Übergang vom Auslassende 17 des Bypassrohres auf einen erweiterten Durchmesser des Klappengehäuses ausgeführt ist.

Die mit dem Antrieb 19 verbundene Drosselklappe 18 ist zum Einstellen einer Gasaustrittstemperatur des Wärmeübertragers 1 auf einen bestimmten Temperaturbereich durch Mischen der gekühlten Abgasströme 14 aus den Wärmeübertragungsrohren 3 mit dem ungekühlten Abgasstrom aus dem Bypassrohr 4 vorgesehen. Mit der in unmittelbarer Nähe am Auslassende 17 des Bypassrohres 4 angeordneten und mittels des Antriebes 19 der Regelvorrichtung 16 verstellbaren Drosselklappe 18 ist eine Austrittsgeschwindigkeit und eine Austrittsmenge des Abgasstromes 14 regelbar.

Die Drosselklappe 18 ist in dem für Hochtemperaturkorrosion empfindlichen Temperaturbereich, der sich von Temperaturen um die 500° C bis in eine Größenordnung von ungefähr 850° C bewegt, aus einem gegen Hochtemperaturkorrosion resistenten Material gefertigt. Die für die Drosselklappe 18 als Regelelement verwendeten Materialien sind hochtemperaturbeständig und hochtemperaturresistente oder metal-dusting-resistente Werkstoffe, die keine spezielle Kühlung erfordern.

Als Material für die Drosselklappe 18 wird ein keramischer Werkstoff verwendet, der in seiner Eigenschaft ein hochtemperaturbeständiger und hochtemperaturresistenter oder metal-dusting-resistenter Werkstoff ist.

Bauteile aus anderen Werkstoffen sind vom ungekühlten Abgasstrom 14 thermisch soweit isoliert angeordnet, dass diese Bauteile gemäß der Eignung dieser Werkstoffe zuverlässig eingesetzt werden können.

## Patentansprüche

1. Wärmeübertrager, der eine Vielzahl von Wärmeübertragungsrohren (3) und ein zentrisch angeordnetes Bypassrohr (4) umfasst, die jeweils zwischen einer ersten Rohrplatte (5) einer Gaseintrittskammer (7) und einer zweiten Rohrplatte (6) einer Gasaustrittskammer (8) gehalten sind, wobei die jeweiligen Rohrplatten (5, 6) mit einem zylindrischen Mantel (2) verbunden sind, innerhalb dem ein Mantelraum (9) ausgebildet ist, in welchem die Wärmeübertragungsrohre (3) und das Bypassrohr (4) eingeschlossen sind und ein Kühlmittel (11) einleitbar ist,
wobei mindestens ein Einlassstutzen (10) angeordnet ist, der mit dem zylindrischen Mantel (2) zum Einleiten von einem Kühlmittel (11) in den Mantelraum (9) auf die Mantelseite der Wärmeübertragungsrohre (3) verbunden ist;
wobei mindestens ein Auslassstutzen (12) angebracht ist, der mit dem zylindrischen Mantel (2) zum Ableiten von erzeugtem Wasser/Dampfgemisch durch indirekte Wärmeübertragung über die Mantelseite der Wärmeübertragungsrohre (3) aus dem Mantelraum (9) verbunden ist;
wobei ein Eintrittsstutzen (13, 13.1) befestigt ist, der seitlich oder axial an der Gaseintrittskammer (7) in Gasflussrichtung vor der ersten Rohrplatte (5) zum Einleiten eines heißen Abgasstromes (14) in die Wärmeübertragungsrohre (3) und das Bypassrohr (4) auf der Gaseintrittsseite der Rohrplatte (5) angeordnet ist;
wobei ein Austrittsstutzen (15, 15.1) angebracht ist, der seitlich oder axial an der Gasaustrittskammer (8) in Gasflussrichtung hinter der zweiten Rohrplatte (6) zum Ableiten eines Gemisches aus den gekühlten Abgasströmen (14) aus den Wärmeübertragungsrohren (3) und dem ungekühlten Abgasstrom aus dem Bypassrohr (4) auf der Gasaustrittsseite der Rohrplatte (6) angeordnet ist,
wobei am Auslassende (17) des Bypassrohres (4) eine Regelvorrichtung (16) angeordnet ist, die eine Klappe (18) und einen außerhalb des Wärmeübertragers (1) angeordneten Antrieb (19) umfasst, wobei die mit dem Antrieb (19) verbundene Klappe (18) zum Einstellen einer Gasaustrittstemperatur des Wärmeübertragers (1) auf einen vorbestimmten Temperaturbereich durch Mischen der gekühlten Abgasströme (14) aus den Wärmeübertragungsrohren (3) mit dem ungekühlten Abgasstrom aus dem Bypassrohr(4) vorgesehen ist, wobei über die am Auslassende (17) des Bypassrohres (4) angeordnete und mittels des Antriebes (19) der Regelvorrichtung (16) verstellbare Klappe (18) eine Austrittsgeschwindigkeit und eine Austrittsmenge des ungekühlten Abgasstromes (14) aus dem Bypassrohr (4) regelbar ist, wobei die Klappe (18) für den für Hochtemperaturkorrosion empfindlichen Temperaturbereich, der bei Temperaturen um 500° C bis etwa 850° C liegt, aus einem gegen Hochtemperaturkorrosion resistenten Material gefertigt ist, wobei die Klappe (18) als Drosselklappe (18) ausgeführt und in einem Klappengehäuse (22) angeordnet ist, wobei die Drosselklappe (18) der Regelvorrichtung (16) mittels des Antriebs (19) über Doppelgelenke (20) verstellbar angeordnet ist, wobei die Drosselklappe (18) der Regelvorrichtung (16) über eine Welle (21) und die Doppelgelenke (20) mit dem Antrieb (19) verbunden ist, wobei die Drosselklappe (18) beidseitig mit einem integrierten Wellenstumpf (27) jeweils in einer an der Innenwand (29) des Klappengehäuses (22) aufgebrachten Wärmeisolierung (24) ausgebildeten Auflagerung (25) und die Welle (21) in einer Auflagerung (26) in der Wand (28) der Gasaustrittskammer (8) angeordnet sind, wobei die über den Wellenstumpf (27) und die Welle (21) mit dem Antrieb (19) verbundenen Doppelgelenke (20) zum Ausgleichen von Dehnungsunterschieden zwischen der jeweiligen Auflagerung (25) des jeweiligen Wellenstumpfes (27) der Drosselklappe (18) im Klappengehäuse (22) und der Auflagerung (26) der Welle (21) in der Wand (28) der Gasausaustrittskammer (8) angeordnet sind.

2. Wärmeübertrager nach Anspruch 1, **dadurch gekennzeichnet, dass** die Drosselklappe (18) im Klappengehäuse (22) senkrecht zur Gasflussrichtung drehbar angeordnet ist.

3. Wärmeübertrager nach einem der Ansprüche 1 oder 2, **dadurch gekennzeichnet, dass** das Klappengehäuse (22) als Verlängerung des Bypassrohres (4) mit gleichem Durchmesser oder erweitertem Durchmesser mit konischem Ansatz (31) als Übergang vom Auslassende (17) des Bypassrohres zum erweiterten Durchmesser des Klappengehäuses ausgebildet ist.

4. Wärmeübertrager nach einem der Ansprüche 1 bis 3, **dadurch gekennzeichnet, dass** das metal-dusting-resistente oder hochtemperaturresistente Material für die Drosselklappe (18) aus einem keramischen Werkstoff besteht.

## Claims

1. A heat exchanger, which comprises a multiplicity of heat transfer pipes (3) and a centrally disposed bypass pipe (4), which are each held between a first pipe plate (5) of a gas intake chamber (7) and a second pipe plate (6) of a gas exit chamber (8), wherein the respective pipe plates (5, 6) are connected to a cylindrical shell (2), inside of which a shell space (9) is formed, in which the heat transfer pipes (3) and the bypass pipe (4) are enclosed and into which a coolant (11) can be introduced,
wherein at least one inlet nozzle (10) is arranged, which is connected to the cylindrical shell (2) for introducing a coolant (11) into the shell space (9) on the shell side of the heat transfer pipes (3),
wherein at least one outlet nozzle (12) is attached, which is connected to the cylindrical shell (2) for discharging water/steam mixture generated by indirect heat transfer via the shell side of the heat transfer pipes (3) from the shell space (9),
wherein an intake nozzle (13, 13.1) is fastened, which is arranged on the gas intake side of the pipe plate (5) laterally or axially on the gas inlet chamber (7) in a gas flow direction in front of the first pipe plate (5) for introducing a hot exhaust gas flow (14) into the heat transfer pipes (3) and the bypass pipe (4),
wherein an exit nozzle (15, 15.1) is attached, which is arranged on the gas exit side of the pipe plate (6) laterally or axially on the gas exit chamber (8) in a gas flow direction behind the second pipe plate (6) for discharging a mixture of the cooled exhaust gas flows (14) from the heat transfer pipes (3) and of the uncooled exhaust gas flow from the bypass pipe (4),
wherein a regulator (16) is arranged on the outlet end (17) of the bypass pipe (4), which comprises a valve (18) and an actuator (19) arranged outside the heat exchanger (1),
wherein the valve (18) connected to the actuator (19) is provided for adjusting a gas exit temperature of the heat exchanger (1) within a predetermined temperature range by mixing the cooled exhaust gas flows (14) from the heat transfer pipes (3) with the uncooled gas flow from the bypass pipe (4),
wherein an exit speed and an exit volume of the uncooled exhaust gas flow (14) from the bypass pipe (4) can be regulated via the valve (18) arranged on the outlet end (17) of the bypass pipe (4) and adjustable by means of the actuator (19) of the regulator (16),
wherein the valve (18) for the temperature range sensitive to high temperature corrosion, which lies at temperatures of around 500° C to ca. 850° C, is made of a metal resistant to high temperature corrosion,
wherein the valve (18) is embodied as a throttle valve (18) and is arranged in a valve housing (22),
wherein the throttle valve (18) of the regulator (16) is adjustable by means of the actuator (19) via double joints (20),
wherein the throttle valve (18) of the regulator (16) is connected to the actuator (19) via a shaft (21) and the double joints (20),
wherein the throttle valve (18) is provided on both sides with an integrated shaft stub (27) arranged in a support (25) formed in heat insulation (24) attached to the inside wall (29) of the valve housing (22) and the shaft (21) is arranged in a support (26) in the wall (28) of the gas exit chamber (8),
wherein the double joints (20) connected via the shaft stub (27) and the shaft (21) to the actuator (19) are arranged for compensating expansion differences between the individual support (25) of the individual shaft stub (27) of the throttle valve (18) in the valve housing (22) and the support (26) of the shaft (21) in the wall (28) of the gas exit chamber (8).

2. The heat exchanger according to Claim 1, **characterized in that** the throttle valve (18) is arranged in the valve housing (22) so that it can be rotated perpendicularly to the gas flow direction.

3. The heat exchanger according to one of Claims 1 to 2, **characterized in that** the valve housing (22) is configured as an extension of the bypass pipe (4) with the same diameter or an enlarged diameter with a tapered attachment (31) as a transition from the outlet end (17) of the bypass pipe to the enlarged diameter of the valve housing.

4. The heat exchanger according to one of Claims 1 to 3, **characterized in that** the metal dusting-resistant or high temperature-resistant material for the throttle valve (18) consists of a ceramic material.

## Revendications

1. Echangeur de chaleur, qui comprend une pluralité de tubes de transfert de chaleur (3) et un tube de dérivation disposé au centre (4), qui sont maintenus respectivement entre une première plaque de tubes (5) d'une chambre d'entrée de gaz (7) et une deuxième plaque de tubes (6) d'une chambre de sortie de gaz (8), les plaques de tubes (5,6) respectives étant reliées à une enveloppe cylindrique (2), à l'intérieur de laquelle est constitué un espace d'enveloppe (9), dans lequel les tubes de transfert de chaleur (3) et le tube de dérivation (4) sont introduits et un réfrigérant (11) peut être introduit,
au moins une tubulure d'admission (10) étant disposée qui est reliée à l'enveloppe cylindrique (2) pour l'introduction d'un réfrigérant (11) dans l'espace d'enveloppe (9) sur le côté d'enveloppe des tubes de transfert de chaleur (3),
au moins une tubulure de sortie (12) étant montée, qui est reliée à l'enveloppe cylindrique (2) pour l'évacuation de l'espace d'enveloppe (9) du mélange eau/vapeur produit par transfert de chaleur indirect sur le côté d'enveloppe des tubes de transfert de chaleur (3),
une tubulure d'entrée (13,13.1) étant fixée, qui est disposée latéralement ou axialement sur la chambre d'entrée de gaz (7) en direction d'écoulement des gaz avant la première plaque de tubes (5) pour l'introduction d'un flux de gaz d'échappement chauds (14) dans les tubes de transfert de chaleur (3) et le tube de dérivation (4) sur le côté d'entrée des gaz de la plaque de tubes (5),
une tubulure de sortie (15, 15.1) étant montée, qui est disposée latéralement ou axialement sur la chambre de sortie de gaz (8) en direction d'écoulement des gaz derrière la deuxième plaque de tubes (6) pour l'évacuation d'un mélange des flux de gaz d'échappement refroidis (14) des tubes de transfert de chaleur (3) et du flux de gaz d'échappement non refroidi du tube de dérivation (4) sur le côté de sortie des gaz de la plaque de tubes (6),
un dispositif de régulation (16) étant disposé sur l'extrémité de sortie (17) du tube de dérivation (4), qui comprend un clapet (18) et un système d'entraînement (19) disposé en dehors de l'échangeur de chaleur (1),
le clapet (18) relié au système d'entraînement (19) pour le réglage d'une température de sortie des gaz de l'échangeur de chaleur (1) étant prévu sur une gamme de températures prédéfinie par mélange des flux de gaz d'échappement refroidis (14) des tubes de transfert de chaleur (3) avec le flux de gaz d'échappement non refroidi du tube de dérivation (4),
une vitesse de sortie et un débit de sortie du flux de gaz d'échappement non refroidi (14) du tube de dérivation (4) pouvant être régulés par le biais du clapet (18) disposé sur l'extrémité de sortie (17) du tube de dérivation (4), réglable au moyen du système d'entraînement (19) du dispositif de régulation (16),
le clapet (18) pour la gamme de températures sensible à la corrosion à hautes températures, qui se situe à des températures de 500°C à environ 850°C, étant fabriqué dans un matériau résistant à la corrosion à hautes températures,
le clapet (18) est exécuté sous la forme d'un clapet d'étranglement (18) et étant disposé dans un boîtier de clapet (22),
le clapet d'étranglement (18) du dispositif de régulation (16) est disposé au moyen du système d'entraînement (19) sur l'articulation double (20),
le clapet d'étranglement (18) du dispositif de régulation (16) est relié au système d'entraînement (19) par le biais d'un arbre (21) et l'articulation double (20),
le clapet d'étranglement (18) est disposé respectivement des deux côtés avec un bout d'arbre (27) intégré dans un support (25) constitué sur l'isolation thermique (24) montée sur la paroi intérieure (29) du boîtier de clapet (22) et l'arbre (21) est disposé dans un support (26) dans la paroi (28) de la chambre de sortie des gaz (8),
l'articulation double (20) reliée par le bout d'arbre (27) et l'arbre (21) au système d'entraînement (19) pour compenser les différences de dilatation entre le support (25) respectif du bout d'arbre (27) respectif du clapet d'étranglement (18) dans le boîtier de clapet (22) et le support (26) de l'arbre (21) dans la paroi (28) de la chambre de sortie des gaz (8).

2. Echangeur de chaleur selon revendication 1, **caractérisé en ce que** le clapet d'étranglement (18) est disposé dans le boîtier de clapet (22) pouvant tourner perpendiculairement par rapport à la direction du flux de gaz.

3. Echangeur de chaleur selon l'une quelconque des revendications 1 à 2, **caractérisé en ce que** le boîtier de clapet (22) est constitué comme prolongement du tube de dérivation (4) avec un diamètre identique ou un diamètre élargi avec saillie conique (31) en tant que transition de l'extrémité de sortie (17) du tube de dérivation vers le diamètre élargi du boîtier de clapet.

4. Echangeur de chaleur selon l'une quelconque des revendications 1 à 3, **caractérisé en ce que** le matériau résistant à la carburation pulvérulente ou résistant aux hautes températures pour le clapet d'étranglement (18) est dans une matière céramique.
